# EUROPEAN PATENT SPECIFICATION

(11) **EP 4 321 372 B1**
(45) Date of publication and mention of the grant of the patent: **22.07.2026**
(21) Application number: 21933814.2
(22) Date of filing: 31.03.2021
(51) Int. Cl.: B60L 53/60, B60L 53/31, B60L 53/66, H02J 7/02, B60L 3/00, B60L 53/30, B60L 53/302, H02J 7/40, H02J 7/50, B60L 53/53, B60L 53/67, B60L 53/65, B60L 53/62, B60L 53/63, B60L 53/68, H02J 7/00

(54) **CHARGING CONTROL SYSTEM AND CHARGING STATION**
LADESTEUERUNGSSYSTEM UND LADESTATION
SYSTÈME DE COMMANDE DE CHARGE ET STATION DE CHARGE

(43) Date of publication of application: 14.02.2024
(73) Proprietor: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: JIANG, Daiping, Hangzhou, Zhejiang 310051 (CN); YANG, Guoyi, Hangzhou, Zhejiang 310051 (CN); GUO, Shuibao, Hangzhou, Zhejiang 310051 (CN); ZHAO, Yue, Hangzhou, Zhejiang 310051 (CN); ZHANG, Ruifeng, Hangzhou, Zhejiang 310051 (CN); YANG, Xianming, Hangzhou, Zhejiang 310051 (CN); CHEN, Shichao, Hangzhou, Zhejiang 310051 (CN); WANG, Cheng, Hangzhou, Zhejiang 310051 (CN); LIU, Gang, Hangzhou, Zhejiang 310051 (CN); HU, Zhen, Hangzhou, Zhejiang 310051 (CN)
(74) Representative: Murgitroyd & Company
(86) International application number: PCT/CN2021/084621
(87) International publication number: WO 2022/205149

(56) References cited:
- EP-A1- 3 301 781
- CN-A- 102 055 217
- CN-A- 103 559 567
- CN-A- 103 559 567
- CN-A- 104 810 894
- CN-A- 110 497 817
- CN-A- 110 497 817
- CN-A- 110 682 804
- CN-A- 110 682 804
- CN-A- 110 803 051
- US-A1- 2016 243 956
- US-B2- 10 137 796

## Description

### Technical Field

The present invention relates to the field of charging control technology, in particular to a charging control system and a charging station.

### Background Art

With the development of electric vehicles, the demand of charging piles or stations is increasing. At present, the charging piles or charging stations are mainly constructed as being integrated and separated. By the integrated structure, the control of the power module and the charging control are integrated in a cabinet, and can be uniformly controlled by a controller. By the split structure, the function control is mainly performed in a module cabinet, the charging control, and the service settlement, etc. are performed in a terminal gun cabinet. However, both solutions have to be custom developed, all controllers are coupled to each other and involve strong coupling with the application scenarios and internal electrical components, so that different products have to be developed for different application scenarios, resulting in long development cycles and high costs, which is unfavorable for rapid deployment and operational maintenance of charging posts or stations.

The US patent US10137796B2 and equally CN 110 497 817 A each relate to a control system for an electric vehicle charging station and a method for controlling the electric vehicle charging station. The published US patent application US2016/243956A1 relates to a charging management system and a charging management method for a charger of an electric vehicle. The published Chinese patent application CN104810894A relates to split type direct-current charging piles for electric automobiles, an electric vehicle split type DC charging pile system, and a method for operating a split type DC charging pile system.

### Summary of the Invention

In view of the above, provided is a charging control system and a charging station that overcome or at least partially solve the above problems.

It is an object of the present invention to provide a charging control system with a hierarchical control architecture and a modular design that can be quickly deployed in combination according to application scenarios, saving development time and costs.

It is a further object of the present invention to enhance the usability and robustness of the charging control system.

It is another object of the present invention to provide a charging station including the charging control system.

In particular, according to an aspect of an embodiment of the invention, provided is a charging control system including:
at least one charging control module at a charging management layer, each charging control module including a charging management unit as an electronic control unit; and
at least one power control module at a power management layer, each of the power control modules including a power management unit as an electronic control unit and a power distributing unit connected to the power management unit;
wherein the power management layer is an upper layer of the charging management layer, and the power management unit in each of the power control modules is connected to the charging management unit in at least one of the charging control modules;
each of the charging management units is configured to be connected to at least one vehicle to be charged, receive a charging request of the vehicle to be charged, and send the charging request to the power management unit connected thereto; and
the power management unit is configured to control the power distributing unit to distribute power to the charging management unit according to a scheduling instruction and the received charging request, and monitor the charging management unit to charge the vehicle to be charged with the distributed power to complete charging power control.

Alternatively, each of the power management units is connected to a cloud, configured to receive the scheduling instruction from the cloud, collect state information about the charging control system and upload same to the cloud for service settlement, wherein the state information about the charging control system includes working state information about each unit and charging control and service information.

The charging control system further includes:
a service control module at a site monitoring layer, including a site monitoring unit as an electronic control unit;
the site monitoring layer is an upper layer of the power management layer; and
the site monitoring unit is respectively connected to the power management unit in each of the power control modules, configured to issue the scheduling instruction to the power management unit, and collect state information about the charging control system, wherein the state information about the charging control system includes working state information about each unit and charging control and service information.

The site monitoring unit is connected to a cloud, configured to receive the scheduling instruction from the cloud to perform station management when connected to the cloud normally, and upload collected state information about the charging control system to the cloud to perform service settlement.

Alternatively, the site monitoring unit is further configured to perform site management autonomously when the connection with the cloud is lost, and store the collected state information about the charging control system locally until the state information about the charging control system is uploaded after the connection with the cloud is reestablished.

Alternatively, the power management unit is further configured to autonomously perform the charging power control when the connection with the site monitoring unit is lost, and record the charging control and service information, and report the charging control and service information to the site monitoring unit until the connection with the site monitoring unit is reestablished.

Alternatively, the charging control system further includes:
at least one energy storage control module at the power management layer, each energy storage control module including an energy management unit as an electronic control unit and an energy storage device connected to the energy management unit;
in the case where the charging control system does not include the site monitoring layer, the energy management units are respectively connected to each of the power management units and configured to control the energy storage device to perform energy storage and discharge in cooperation with each of the power management units; and
in the case where the charging control system includes the site monitoring layer, the energy management unit is respectively connected to each of the power management units and the site monitoring unit, and is configured to control the energy storage device to perform energy storage and discharge under deployment control of the site monitoring unit and/or in cooperation with each of the power management units.

Alternatively, each of the power control modules further includes a plurality of power modules; and
the power distributing unit is configured to execute switching logic of the power module under control of the power management unit to distribute power to the charging management unit.

Each of the electronic control units operates in at least one of the following modes:
an upper layer deployment control mode configured to control the operation according to the distribution of the electronic control unit of the upper layer;
an autonomous mode configured to operate autonomously;
a same-layer cooperation mode configured to cooperate with other electronic control units of the same layer; and
the priorities of the upper layer deployment control mode, the same layer cooperation mode and the autonomous mode decrease in sequence.

Each of the power management units is further configured to automatically disengage the charging control system and stop control of the power distributing unit and the charging management unit connected thereto after a failure thereof.

Alternatively, each of the charging management units is further configured to automatically disengage the control of the power management unit connected thereto and stop charging after a failure thereof.

Alternatively, each of the energy management units is further configured to automatically disengage the charging control system and cease control of the energy storage device connected thereto after a failure thereof.

Alternatively, the charging control system is installed at a charging station including a camera device, a ground lock system, and an access control system;
the site monitoring unit is respectively connected to the camera device, the ground lock system, and the access control system, and is further configured to collect an image of the camera device for environmental monitoring, and to control the ground lock system and the access control system.

Alternatively, the power management unit is further configured to perform voltage insulation monitoring in response to the charging request.

Alternatively, the charging management unit is further configured to provide at least one of the following functions:
a function of interacting with the vehicle to be charged, a function of human-computer interaction with a user, and a liquid cooling control function.

According to another aspect of embodiments of the present invention, also provided is a charging station including a charging control system as described in any of the above.

According to the charging control system provided by an embodiment of the present invention, a hierarchical control architecture and a modular design are used, wherein a network architecture of the charging control system includes a charging management layer and a power management layer, and may optionally further include a site monitoring layer; the module architecture of the charging control system includes a charging control module and a power control module, and optionally a service control module and an energy storage control module. In this way, complete decoupling of the charging control system in terms of function, electrical arrangement, and physical space is achieved, so that it can be quickly deployed in combination according to application scenarios, saving development time and cost.

Further, the embodiments of the present invention provide a charging control system in which each module uses a combination of single master control and multi-master automatic cooperation, can work cooperatively with each other or independently, and has high system availability. Further, any module failure can automatically leave the control system without affecting the operation of other modules, and the system has high robustness and easy maintenance.

The above description is merely an overview of the technical aspects of the present invention, which can be carried out in accordance with the contents of the description in order to make the technical aspects of the present invention more clearly understood, and in order to make the above and other objects, features, and advantages of the present invention more apparent, embodiments of the present invention will be described below.

The above and other objects, advantages and features of the present invention will become more apparent to a person skilled in the art from the following detailed description of embodiments of the invention when taken in conjunction with the accompanying drawings.

### Brief Description of the Drawings

Specific embodiments of the invention will be described in detail hereinafter, by way of example and not limitation, with reference to the accompanying drawings. Wherever possible, the same reference numbers will be used throughout the drawings to refer to the same or like parts or portions. A person skilled in the art would appreciate that the figures are not necessarily drawn to scale. In the drawings:
FIG. 1 is a schematic block diagram of a charging control system according to an embodiment of the disclosure ;
FIG. 2 is a schematic block diagram of a charging control system according to another embodiment of the invention;
FIG. 3 is a hierarchical architecture diagram of a charging control system according to an embodiment of the invention;
FIG. 4 is a schematic diagram showing a constitution of a charging control system according to an embodiment of the present invention.

### Detailed Description of the Invention

Exemplary embodiments of the present disclosure will be described in more detail below with reference to the accompanying drawings. While the drawings show exemplary embodiments of the present disclosure, it should be understood that the present disclosure may be embodied in various forms and should not be construed as limited to the embodiments set forth herein. Rather, these embodiments are provided so that this disclosure will be thorough and complete, and will fully convey the scope of the disclosure to a person skilled in the art. The invention is defined in the appended claims.

To address or at least partially address the above-described problems, embodiments of the present invention provide a charging control system.

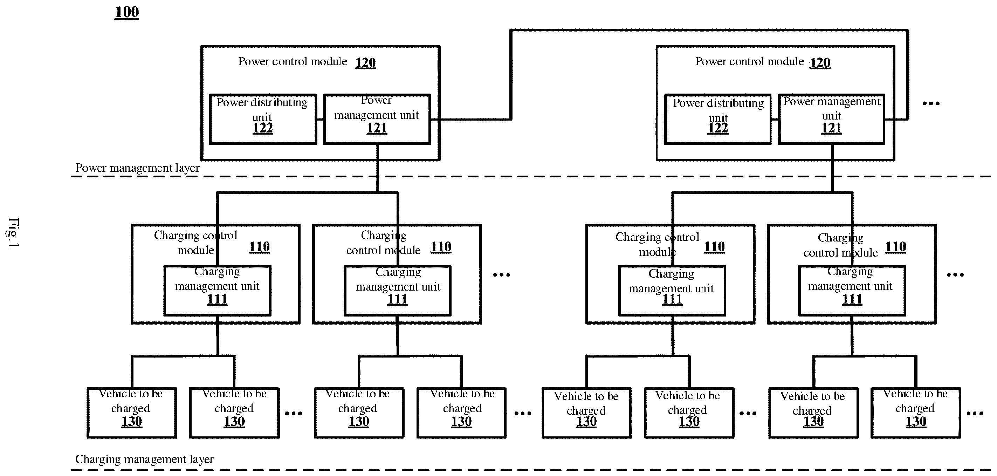

FIG. 1 shows a schematic block diagram of a charging control system 100 according to an embodiment of the present disclosure. Referring to FIG. 1, the charging control system 100 employs a hierarchical control architecture and may generally include at least one charging control module 110 and at least one power control module 120. The hierarchical control architecture of the charging control system 100 may include at least one charging management layer and a power management layer, the power management layer being an upper layer of the charging management layer. The at least one charging control module 110 is in a charging management layer, and each charging control module 110 includes a Charging Management Unit (CMU) 111 as an Electronic Control Unit (ECU). The at least one power control module 120 is in a power management layer, and each power control module 120 includes a Power Management Unit (PMU) 121 as an electronic control unit and a Power Distributing Unit (PDU) 122 connected to the power management unit 121. The power management unit 121 in each power control module 120 is connected to the charging management unit 111 in at least one charging control module 110. Each charging management unit 111 may be configured to connect with at least one vehicle to be charged 130, receive a charging request of the vehicle to be charged 130, and send the charging request to the power management unit 121 connected thereto. The power management unit 121 controls the power distributing unit 122 connected to the power management unit 121 to distribute power to the charging management unit 111 according to the scheduling instruction and the received charging request, and monitors the charging management unit 111 to charge the vehicle to be charged 130 using the distributed power to complete the charging power control. It should be noted that the number of components shown in FIG. 1 is merely illustrative and does not limit the invention.

According to the charging control system 100 provided by an embodiment of the present disclosure, a hierarchical control architecture and a modular design are used, wherein the network architecture of the charging control system 100 includes a charging management layer and a power management layer, and the module architecture of the charging control system 100 includes a charging control module 110 and a power control module 120. In this way, the modules can be decoupled, achieving complete decoupling of the charging control system 100 in terms of function, electrical arrangement, and physical space, so that it can be quickly deployed in combination according to application scenarios, saving development time and cost.

According to a further example, each power management unit 121 may interact directly with a cloud connection (e.g., a wireless connection or a wired Ethernet interface). The power management unit 121 receives the scheduling instruction from the cloud, collects state information about the charging control system 100 and uploads same to the cloud for service settlement. According to the embodiment, the state information of the charging control system 100 includes operation state information of each unit (specifically, such as the power management unit 121, the power distributing unit 122, the charging management unit 111, etc.) and charging control and service information (such as charging time, amount of charge consumed by charging, charging user information, etc.).

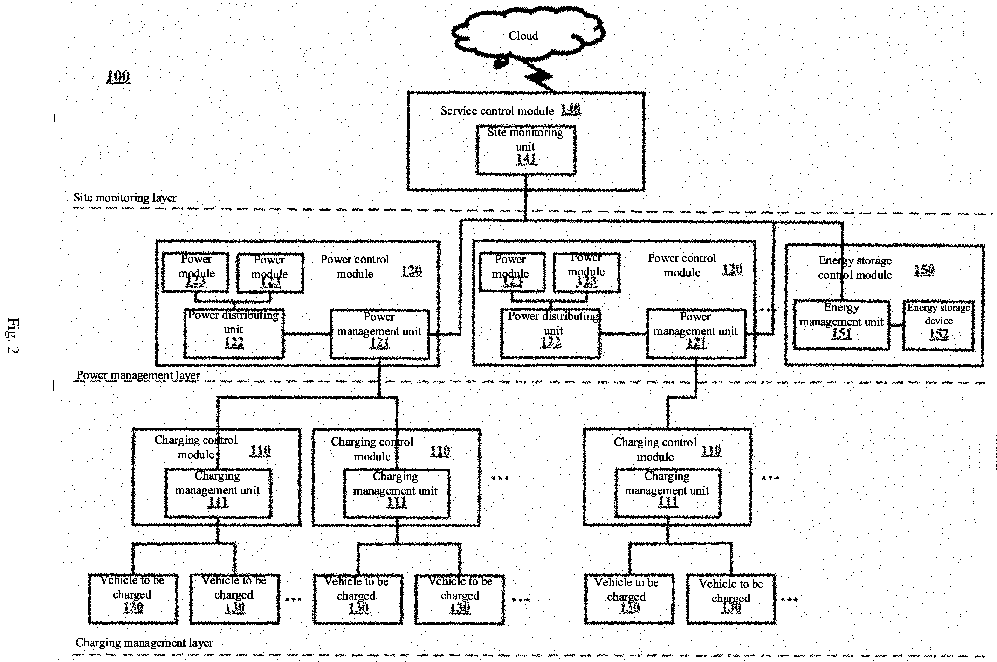

FIG. 2 shows a schematic block diagram of a charging control system 100 according to an embodiment of the present invention. It should be noted that the number of components shown in FIG. 2 is merely illustrative and does not limit the invention.

According to an embodiment of the present invention, illustrated with reference to FIG. 2, the network architecture of the charging control system 100 includes a site monitoring layer, which is an upper layer of the power management layer. The charging control system 100 includes a service control module 140. The service control module 140 is located at a site monitoring layer, and includes a Station Monitor Unit (SMU) 141 as an electronic control unit. The site monitoring unit 141 is respectively connected to the power management unit 121 in each power control module 120, and is configured to issue a scheduling instruction to the power management unit 121 and collect state information about the charging control system 100. According to the embodiment, the state information of the charging control system 100 includes operation state information of each unit (specifically, the site monitoring unit 141, the power management unit 121, the power distributing unit 122, the charging management unit 111, etc.) and charging control and service information.

According to the invention, the site monitoring unit 141 is connected to a cloud (e.g., a wireless connection or a wired Ethernet interface). The site monitoring unit 141 receives the scheduling instruction from the cloud for site management when normally connected to the cloud, and uploads the collected state information of the charging control system 100 to the cloud for service settlement.

According to some embodiments, when the site monitoring unit 141 loses connection with the cloud, the site monitoring unit 141 may autonomously perform station management (at this time, a scheduling instruction is autonomously generated by the site monitoring unit 141), and locally store the collected state information about the charging control system 100 until the state information about the charging control system 100 is uploaded after the connection with the cloud is reestablished.

According to other embodiments, when the power management unit 121 loses connection with the site monitoring unit 141, the power management unit 121 may also autonomously perform charging power control to complete vehicle charging, record charging control and service information, and report the charging control and service information to the site monitoring unit 141 until a connection is reestablished with the site monitoring unit 141.

The above-described embodiments can ensure that the charging control system 100 is still functioning properly in the event of a local connection failure and avoid data loss.

According to an alternative embodiment, as shown with continued reference to FIG. 2, the charging control system 100 may also include at least one energy storage control module 150 at the power management level. Each energy storage control module 150 includes an Energy Management Unit (EMU) 151 as an electronic control unit and an energy storage device 152 (e.g. a battery, etc.) connected to the energy management unit 151. In the case where the charging control system 100 does not include a site monitoring layer, the energy management units 151 may be respectively connected to each of the power management units 121 and configured to cooperate with each of the power management units 121 to control the energy storage devices 152 to store and discharge energy to function as a charging sink and energy balancer for the entire charging pile/station. In the case where the charging control system 100 includes a site monitoring layer, the energy management unit 151 may be connected to each of the power management units 121 and the site monitoring unit 141, respectively, and configured to control the energy storage device 152 to store and discharge energy under deployment control of the site monitoring unit 141 and/or in cooperation with each of the power management units 121 to function as a charging sink and energy balancer for the entire charging pile/station. Further, when the charging control system 100 includes the energy storage control module 150, the operation state information of each unit included in the state information of the charging control system 100 mentioned above also includes the operation state information of the energy management unit 151.

According to an alternative embodiment, with continued reference to FIG. 2, each power control module 120 further includes a plurality of power modules 123. The power distributing unit 122 executes switching logic of the power module 123 under the control of the power management unit 121 to distribute power to the charging management unit 111.

According to a preferred embodiment of the present invention, each of the electronic control units of the charging control system 100 (specifically, the site monitoring unit 141, the power management unit 121, the energy management unit 151, and the charging management unit 111) may operate in at least one of an upper-level deployment control mode, an autonomous mode, and a same-layer cooperation mode. The upper-layer deployment control mode refers to operating according to the deployment control of the electronic control unit of the upper layer, for example, the power management unit 121 or the energy management unit 151 in the power management layer operates under the deployment control of the site monitoring unit 141 in the site monitoring layer, or the charging management unit 111 in the charging management layer operates under the deployment control of the power management unit 121. The autonomous mode means that the electronic control unit operates autonomously, for example, the site monitoring unit 141 performs site management autonomously when the connection with the cloud is lost. The same-layer cooperation mode means that the electronic control unit operates in cooperation with other electronic control units of the same layer, for example, the energy management unit 151 may operate in cooperation with the power management unit 121, or a power management unit 121 may operate in cooperation with the energy management unit 151 or other power management units 121. Under the normal operation condition of the charging control system 100, the above-mentioned three operation modes coexist, and the priorities of the upper layer deployment control mode, the same-layer cooperation mode and the autonomous mode decrease in sequence, i.e., the priority order is: the upper layer distribution control mode> the same-layer cooperation mode> the autonomous mode.

According to the embodiment, each module of the charging control system 100 uses a combination of a single master control (i.e., deployment control via a single site monitoring unit 141) and multi-master automatic cooperation (i.e., coordinated operation of multiple electronic control units at the same layer), and can work cooperatively with each other or independently, thereby enhancing system availability.

According to the invention, any of the power management units 121 may automatically disengage from the charging control system 100 and stop control of the power distributing unit 122 and the charging management unit 111 connected thereto after a failure in itself. That is, the power control module 120 in which the failed power management unit 121 is located automatically departs from the control system 100.

According to some embodiments, any one of the charging management units 111 may automatically disengage the control of its connected power management unit 121 and stop charging after a failure in itself. That is, the charging control module 110 where the failed charging management unit 111 is located automatically comes out of the control system 100.

According to some embodiments, any of the energy management units 151 may automatically disengage the charging control system 100 and cease control of the energy storage device 152 connected thereto after a failure in itself. That is, the energy storage control module 150 in which the failed energy management unit 151 is located automatically disengages from the control system 100.

With this design, any module failure can automatically leave the control system 100 without affecting the operation of other modules, enhancing system robustness, and facilitating maintenance. In addition, a repaired failed module or an added new module may be automatically entered into the control system 100 for operation "plug and play".

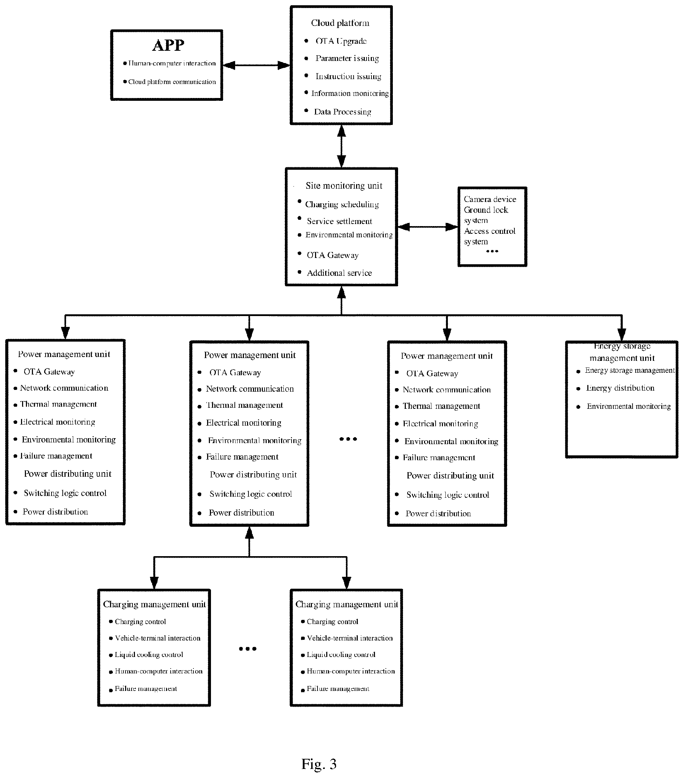

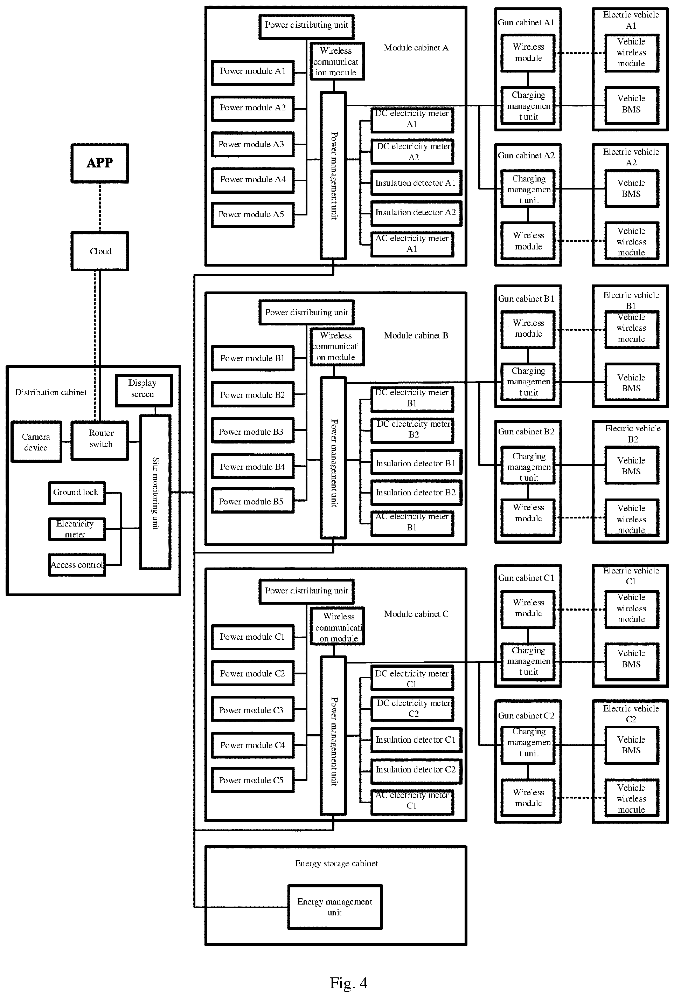

FIG. 3 shows a hierarchical architecture diagram of the charging control system 100 according to an embodiment of the present invention, and FIG. 4 shows a schematic diagram of the constituent structures of the charging control system 100 according to an embodiment of the present invention. The charging control system 100 according to an embodiment of the present invention will be described in more detail with reference to FIGS. 3 and 4.

As shown in FIG. 3, the charging control system 100 of the embodiment is mainly divided into three layers, i.e., a site monitoring layer, a power management layer, and a charging management layer. The functions of the site monitoring layer are realized by the site monitoring unit 141, mainly performing the management of the whole site (e.g. charging scheduling of the site, service settlement, environment monitoring, etc.). The site monitoring unit 141 communicates with a cloud platform (i.e., a cloud) via an Over-the-Air (OTA) gateway. The cloud platform can realize OTA upgrading, parameter issuing, instruction issuing, information monitoring, data processing and other functions. The cloud platform can further communicate with the client APP to achieve human-computer interaction.

The site monitoring unit 141 may also perform other additional services. For example, the charging control system 100 may be installed at a charging station, which may include a camera device, a ground lock system, and an access control system. The site monitoring unit 141 may be connected to the camera device, the ground lock system, and the access control system, respectively, and collect images of the camera device for environmental monitoring, and control the ground lock system and the access control system.

The power management layer consists of a plurality of power management units 121 and power distributing units 122 and energy management units 151. The power management unit 121 can communicate with the site monitoring unit 141 through the OTA gateway, mainly realizing the functions of power management, thermal management, electrical monitoring, and environmental monitoring. Specifically, in the electrical monitoring, the power management unit 121 may perform voltage insulation monitoring in response to the charging request of the charging management unit 111. In addition, the power management unit 121 may also perform fault management in the event of a fault in itself to achieve automatic detachment from control system 100 following the fault. The power distributing unit 122 mainly implements the functions of switching logic control of power, power distribution, etc. The energy management unit 151 mainly implements functions such as energy storage management, energy distribution and environmental monitoring.

The charging management layer is composed of a plurality of charging management units 111, and mainly realizes functions such as communication with the vehicle to be charged 130 (i.e., vehicle-side interaction), charging control, liquid cooling gun cooling system control (i.e., liquid cooling control) and human-computer interaction. The charging management unit 111 may also perform failure management when it itself fails to automatically disengage the control system 100 after the failure.

The ECU of the same layer can accept the deployment control of the ECU of the upper layer, can also operate autonomously, and can also operate in cooperation with other ECU of the same layer. Under normal operation, the above three operation modes coexist, and the priority order is: upper-level ECU deployment control> co-operation of same-level ECU> autonomous operation. When an ECU loses the distribution control of the upper ECU, it will automatically turn to cooperative operation or autonomous operation. The power management unit 121 of the power management layer is also responsible for controlling the power distributing unit 122 to achieve the full functionality of power management. The energy management unit 151 controls the battery energy storage cabinet, and performs energy storage and discharge under the deployment control of the upper-layer site monitoring unit 141 and in cooperation with the power management unit 121 of the same layer to provide a charging pile/station with a charging treasure and an energy balancer function.

FIG. 4 shows the constitution of the charging control system 100 of the embodiment an embodiment of the disclosure in more detail. The service control module 140 is provided in a power distribution cabinet (or a low voltage cabinet), each power control module 120 is provided in a corresponding module cabinet, the energy control module is provided in an energy storage cabinet, and each charging control module 110 is provided in a corresponding gun cabinet.

The site monitoring unit (SMU) is responsible for managing the whole station, communicating with the cloud, uploading state information about the charging control system 100 and receiving a cloud scheduling instruction; the power management unit PMU in the module cabinet and the energy management unit EMU in the energy storage cabinet are connected downward via a bus such as Ethernet or Controller Area Network (CAN), and information about the working state of each PMU and EMU is collected and scheduling control is performed (such as energy charging and discharging control of the energy storage cabinet, power distribution control of each module cabinet, etc.).

The PMU in the module cabinet is the core component of the charging control system 100, and is respectively connected to the site monitoring unit SMU and other PMUs/EMUs via a CAN network or an Ethernet network, and reports working state information and receives scheduling instructions, or performs cooperative control with other PMUs/EMUs. PMU has two paths of CAN network downwards, one path is connected to the power module in the module cabinet and the power distributing unit PDU to realize power distribution scheduling and module switching control, and the other path is connected to the charging management unit CMU of the gun cabinet to realize interactive control of the charging process. PMU also collects information such as voltage insulation via buses such as RS485 (e.g., collecting information detector) to provide necessary information for power control, charging interaction and service settlement. The CMU in the gun cabinet interacts with the vehicle to control charging, and interacts with the PMU to complete the charging process, while providing the necessary human-computer interaction (e.g., information display), gun cabinet monitoring, heat management of liquid-cooled gun, etc.

As shown in FIG. 4, there may be multiple gun cabinets and module cabinets. A charging station may be provided with one or more energy storage cabinets and one or more module cabinets. A module cabinet can be connected to one or more gun cabinets, and a gun cabinet can be connected to one or more vehicles (in particular electric vehicles) to be charged. Gun cabinets, module cabinets and energy storage cabinets may be added or deleted as required by the charging station. The charging management unit (CMU) of each gun cabinet is controlled by the PMU of the module chest and requests the PMU to output the required power for charging after interacting with the vehicle. PMU monitors the operation of CMU, completes insulation monitoring, power distribution, etc. in response to the request of CMU, and finally achieves the charging function. At the same time, the PMU also controls the PDU and each power module according to the request of each CMU, the scheduling instruction of the SMU, and the states of other PMU and the EMU to distribute the power of each power module to each gun cabinet, and then transmits energy to the Battery Management System (BMS) of the vehicle via the gun cabinet.

If the SMU loses communication with the cloud, the SMU directly performs site management and completes storage of all charging control and business information, and uploads relevant charging control and business information after establishing a connection with the cloud and completes service settlement. Similarly, if the PMU is disconnected from the SMU, each PMU can perform charging power control to complete the charge, record the charge data, and report the recorded charge data after the connection with the SMU is successful. If the PMU of one module cabinet or the EMU of the energy storage cabinet fails, it automatically leaves the system and stops the power control of this module cabinet, without affecting the operation of other cabinets. If the CMU of a gun cabinet fails, the gun cabinet automatically disengages from the control system 100 and stops charging without affecting other gun cabinet charges.

According to the embodiment, by means of hierarchical design and modular design, various modules can be operated in combination or independently, there are multiple independent vehicle charging connections from the lower layer to the upper layer, multiple independent gun cabinets, multiple independent module cabinets, and any module addition, deletion and damage at the same level will not affect the operation of other modules, and can be rapidly added and subtracted for different scenarios, and can be freely combined to achieve rapid deployment, which greatly enhances the usability and robustness of the system.

Based on the same technical concept, embodiments of the present invention also provide a charging station including the charging control system 100 of any one or a combination of the foregoing embodiments.

According to the charging control system provided by an embodiment of the present invention, a hierarchical control architecture and a modular design are used, wherein a network architecture of the charging control system includes a charging management layer and a power management layer, and further includes a site monitoring layer; the module architecture of the charging control system includes a charging control module and a power control module, and optionally a service control module and an energy storage control module. In this way, the complete decoupling of the charging control system in function, electrical arrangement and physical space is achieved, so that it can be quickly combined and deployed according to the application scenarios, saving development time and cost.

Further, the embodiments of the present invention provide a charging control system in which each module uses a combination of single master control and multi-master automatic cooperation, can work cooperatively with each other or independently, and has high system availability. Further, any module failure can automatically leave the control system without affecting the operation of other modules, and the system has high robustness and easy maintenance.

## Claims

1. A charging control system, comprising:
at least one charging control module (110) at a charging management layer, each charging control module (110) comprising a charging management unit (111) as an electronic control unit;
and
at least one power control module (120) at a power management layer, each of the power control modules (120) comprising a power management unit as an electronic control unit and a power distributing unit (122) connected to the power management unit (121);
wherein the power management layer is an upper layer of the charging management layer, and the power management unit (121) in each of the power control modules (120) is connected to the charging management unit (111) in at least one of the charging control modules (110);
each of the charging management units (111) is configured to be connected to at least one vehicle to be charged, receive a charging request of the vehicle to be charged, and send the charging request to the power management unit (121) connected thereto; and
the power management unit (121) is configured to control the power distributing unit (122) to distribute power to the charging management unit (111) according to a scheduling instruction and the received charging request, and monitor the charging management unit (111) to charge the vehicle to be charged with the distributed power to complete charging power control; and
a service control module (140) at a site monitoring layer, comprising a site monitoring unit (141) as an electronic control unit;
the site monitoring layer is an upper layer of the power management layer; and
the site monitoring unit (141) is respectively connected to the power management unit (121) in each of the power control modules (120), configured to issue the scheduling instruction to the power management unit (121), and collect state information about the charging control system, wherein the state information about the charging control system comprises working state information about each unit and charging control and service information; and
wherein the site monitoring unit (141) is connected to a cloud, configured to receive the scheduling instruction from the cloud to perform station management when connected to the cloud normally, and upload collected state information about the charging control system to the cloud to perform power settlement; and
wherein each of the electronic control units operates in at least one of the following modes:
an upper layer deployment control mode configured to control the operation according to the distribution of the electronic control unit of the upper layer;
an autonomous mode configured to operate autonomously;
a same-layer cooperation mode configured to cooperate with other electronic control units of the same layer; and
the priorities of the upper layer deployment control mode, the same layer cooperation mode and the autonomous mode decrease in sequence; and
wherein each of the power management units (121) is further configured to automatically disengage the charging control system and stop control of the power distributing unit (122) and the charging management unit connected thereto after the power management units (121) fail.

2. The charging control system according to claim 1, wherein each of the power management units(121) is connected to a cloud, configured to receive the scheduling instruction from the cloud, collect state information about the charging control system and upload same to the cloud for power settlement, wherein the state information about the charging control system comprises working state information about each unit and charging control and service information.

3. The charging control system according to claim 1, wherein the site monitoring unit (141) is further configured to perform site management autonomously when the connection with the cloud is lost, and store the collected state information about the charging control system locally until the state information about the charging control system is uploaded after the connection with the cloud is reestablished.

4. The charging control system according to claim 1, wherein the power management unit (121) is further configured to autonomously perform the charging power control when the connection with the site monitoring unit (141) is lost, and record the charging control and service information, and report the charging control and service information to the site monitoring unit until the connection with the site monitoring unit is reestablished.

5. The charging control system according to claim 1, further comprising:
at least one energy storage control module (150) at the power management layer, each energy storage control module comprising an energy management unit (151) as an electronic control unit and an energy storage device (152) connected to the energy management unit; in the case where the charging control system does not comprise the site monitoring layer, the energy management units are respectively connected to each of the power management units (121) and configured to control the energy storage device to perform energy storage and discharge in cooperation with each of the power management units (121); and
in the case where the charging control system comprises the site monitoring layer, the energy management unit is respectively connected to each of the power management units (121) and the site monitoring unit, and is configured to control the energy storage device to perform energy storage and discharge under deployment control of the site monitoring unit and/or in cooperation with each of the power management units (121).

6. The charging control system according to claim 1, wherein each of the power control modules (120) further comprises a plurality of power modules; and
the power distributing unit (122) is configured to execute switching logic of the power module under control of the power management unit (121) to distribute power to the charging management unit (111).

7. The charging control system according to claim 1, wherein each of the charging management units is further configured to automatically disengage the control of the power management unit (121) connected thereto and stop charging after the charging management units (111) fail.

8. The charging control system according to claim 5, wherein each of the energy management units is further configured to automatically disengage the charging control system and cease control of the energy storage device connected thereto after the energy management units (151) fail

9. A charging station comprising the charging control system according to claim 1, wherein the charging control system is installed at the charging station, the charging station comprising a camera device, a ground lock system, and an access control system;
the site monitoring unit is respectively connected to the camera device, the ground lock system, and the access control system, and is further configured to collect an image of the camera device for environmental monitoring, and to control the ground lock system and the access control system.

10. The charging control system according to claim 1, wherein the power management unit (121) is further configured to perform voltage insulation monitoring in response to the charging request of the charging management unit (111).

11. The charging control system according to claim 1, wherein the charging management unit is further configured to provide at least one of the following functions:
a function of interacting with the vehicle to be charged, a function of human-computer interaction with a user, and a liquid cooling control function which is controlled for the charging management units (111).

12. A charging station, comprising the charging control system according to any one of claims 1-11.

## Patentansprüche

1. Ein Ladesteuerungssystem, das Folgendes beinhaltet:
mindestens ein Ladesteuerungsmodul (110) an einer Ladeverwaltungsschicht, wobei jedes Ladesteuerungsmodul (110) eine Ladeverwaltungseinheit (111) als eine elektronische Steuereinheit beinhaltet; und
mindestens ein Leistungssteuerungsmodul (120) an einer Leistungsverwaltungsschicht, wobei jedes der Leistungssteuerungsmodule (120) eine Leistungsverwaltungseinheit als eine elektronische Steuereinheit und eine Leistungsverteilungseinheit (122), die mit der Leistungsverwaltungseinheit (121) verbunden ist, beinhaltet;
wobei die Leistungsverwaltungsschicht eine obere Schicht der Ladeverwaltungsschicht ist und die Leistungsverwaltungseinheit (121) in jedem der Leistungssteuerungsmodule (120) mit der Ladeverwaltungseinheit (111) in mindestens einem der Ladesteuerungsmodule (110) verbunden ist;
jede der Ladeverwaltungseinheiten (111) dazu konfiguriert ist, mit mindestens einem zu ladenden Fahrzeug verbunden zu werden, eine Ladeanforderung des zu ladenden Fahrzeugs zu empfangen und die Ladeanforderung an die damit verbundene Leistungsverwaltungseinheit (121) zu senden; und
die Leistungsverwaltungseinheit (121) dazu konfiguriert ist, die Leistungsverteilungseinheit (122) zu steuern, um Leistung an die Ladeverwaltungseinheit (111) gemäß einer Planungsanweisung und der empfangenen Ladeanforderung zu verteilen, und die Ladeverwaltungseinheit (111) zu überwachen, um das zu ladende Fahrzeug mit der verteilten Leistung zu laden, um die Ladeleistungssteuerung abzuschließen; und
ein Servicesteuerungsmodul (140) an einer Standortüberwachungsschicht, das eine Standortüberwachungseinheit (141) als eine elektronische Steuereinheit beinhaltet;
die Standortüberwachungsschicht eine obere Schicht der Leistungsverwaltungsschicht ist; und
die Standortüberwachungseinheit (141) jeweils mit der Leistungsverwaltungseinheit (121) in jedem der Leistungssteuerungsmodule (120) verbunden ist, dazu konfiguriert, die Planungsanweisung an die Leistungsverwaltungseinheit (121) auszugeben und Zustandsinformationen über das Ladesteuerungssystem zu sammeln, wobei die Zustandsinformationen über das Ladesteuerungssystem Arbeitszustandsinformationen über jede Einheit und Ladesteuerungs- und Serviceinformationen beinhalten; und
wobei die Standortüberwachungseinheit (141) mit einer Cloud verbunden ist, dazu konfiguriert, die Planungsanweisung von der Cloud zu empfangen, um Stationsverwaltung durchzuführen, wenn sie normal mit der Cloud verbunden ist, und gesammelte Zustandsinformationen über das Ladesteuerungssystem in die Cloud hochzuladen, um Leistungsregelung durchzuführen; und
wobei jede der elektronischen Steuereinheiten in mindestens einem der folgenden Modi arbeitet:
einem Einsatzsteuerungsmodus der oberen Schicht, der dazu konfiguriert ist, den Betrieb gemäß der Verteilung der elektronischen Steuereinheit der oberen Schicht zu steuern;
einem autonomen Modus, der dazu konfiguriert ist, autonom zu arbeiten;
einem Kooperationsmodus der gleichen Schicht, der dazu konfiguriert ist, mit anderen elektronischen Steuereinheiten der gleichen Schicht zu kooperieren; und
die Prioritäten des Einsatzsteuerungsmodus der oberen Schicht, des Kooperationsmodus der gleichen Schicht und des autonomen Modus der Reihe nach abnehmen; und
wobei jede der Leistungsverwaltungseinheiten (121) ferner dazu konfiguriert ist, das Ladesteuerungssystem automatisch zu lösen und die Steuerung der Leistungsverteilungseinheit (122) und der damit verbundenen Ladeverwaltungseinheit zu stoppen, nachdem die Leistungsverwaltungseinheiten (121) ausgefallen sind.

2. Ladesteuerungssystem gemäß Anspruch 1, wobei jede der Leistungsverwaltungseinheiten (121) mit einer Cloud verbunden ist, dazu konfiguriert, die Planungsanweisung von der Cloud zu empfangen, Zustandsinformationen über das Ladesteuerungssystem zu sammeln und diese zur Leistungsregelung in die Cloud hochzuladen, wobei die Zustandsinformationen über das Ladesteuerungssystem Arbeitszustandsinformationen über jede Einheit und Ladesteuerungs- und Serviceinformationen beinhalten.

3. Ladesteuerungssystem gemäß Anspruch 1, wobei die Standortüberwachungseinheit (141) ferner dazu konfiguriert ist, Standortverwaltung autonom durchzuführen, wenn die Verbindung mit der Cloud verloren geht, und die gesammelten Zustandsinformationen über das Ladesteuerungssystem lokal zu speichern, bis die Zustandsinformationen über das Ladesteuerungssystem hochgeladen sind, nachdem die Verbindung mit der Cloud wiederhergestellt ist.

4. Ladesteuerungssystem gemäß Anspruch 1, wobei die Leistungsverwaltungseinheit (121) ferner dazu konfiguriert ist, die Ladeleistungssteuerung autonom durchzuführen, wenn die Verbindung mit der Standortüberwachungseinheit (141) verloren geht, und die Ladesteuerungs- und Serviceinformationen aufzuzeichnen und die Ladesteuerungs- und Serviceinformationen an die Standortüberwachungseinheit zu melden, bis die Verbindung mit der Standortüberwachungseinheit wiederhergestellt ist.

5. Ladesteuerungssystem gemäß Anspruch 1, das ferner Folgendes beinhaltet:
mindestens ein Energiespeichersteuerungsmodul (150) an der Leistungsverwaltungsschicht, wobei jedes Energiespeichersteuerungsmodul eine Energieverwaltungseinheit (151) als eine elektronische Steuereinheit und eine Energiespeichervorrichtung (152), die mit der Energieverwaltungseinheit verbunden ist, beinhaltet;
in dem Fall, in dem das Ladesteuerungssystem die Standortüberwachungsschicht nicht beinhaltet, die Energieverwaltungseinheiten jeweils mit jeder der Leistungsverwaltungseinheiten (121) verbunden und dazu konfiguriert sind, die Energiespeichervorrichtung zu steuern, um Energiespeicherung und -entladung in Kooperation mit jeder der Leistungsverwaltungseinheiten (121) durchzuführen; und
in dem Fall, in dem das Ladesteuerungssystem die Standortüberwachungsschicht beinhaltet, die Energieverwaltungseinheit jeweils mit jeder der Leistungsverwaltungseinheiten (121) und der Standortüberwachungseinheit verbunden und dazu konfiguriert ist, die Energiespeichervorrichtung zu steuern, um Energiespeicherung und -entladung unter Einsatzsteuerung der Standortüberwachungseinheit und/oder in Kooperation mit jeder der Leistungsverwaltungseinheiten (121) durchzuführen.

6. Ladesteuerungssystem gemäß Anspruch 1, wobei jedes der
Leistungssteuerungsmodule (120) ferner eine Vielzahl von Leistungsmodulen beinhaltet; und
die Leistungsverteilungseinheit (122) dazu konfiguriert ist, Schaltlogik des Leistungsmoduls unter Steuerung der Leistungsverwaltungseinheit (121) auszuführen, um Leistung an die Ladeverwaltungseinheit (111) zu verteilen.

7. Ladesteuerungssystem gemäß Anspruch 1, wobei jede der Ladeverwaltungseinheiten ferner dazu konfiguriert ist, die Steuerung der damit verbundenen Leistungsverwaltungseinheit (121) automatisch zu lösen und das Laden zu stoppen, nachdem die Ladeverwaltungseinheiten (111) ausgefallen sind.

8. Ladesteuerungssystem gemäß Anspruch 5, wobei jede der Energieverwaltungseinheiten ferner dazu konfiguriert ist, das Ladesteuerungssystem automatisch zu lösen und die Steuerung der damit verbundenen Energiespeichervorrichtung zu stoppen, nachdem die Energieverwaltungseinheiten (151) ausgefallen sind.

9. Eine Ladestation, die das Ladesteuerungssystem gemäß Anspruch 1 beinhaltet, wobei das Ladesteuerungssystem an der Ladestation installiert ist, wobei die Ladestation eine Kameravorrichtung, ein Bodenverriegelungssystem und ein Zugangssteuerungssystem beinhaltet;
die Standortüberwachungseinheit jeweils mit der Kameravorrichtung, dem Bodenverriegelungssystem und dem Zugangssteuerungssystem verbunden ist und ferner dazu konfiguriert ist, ein Bild der Kameravorrichtung zur Umgebungsüberwachung zu sammeln und das Bodenverriegelungssystem und das Zugangssteuerungssystem zu steuern.

10. Ladesteuerungssystem gemäß Anspruch 1, wobei die Leistungsverwaltungseinheit (121) ferner dazu konfiguriert ist, Spannungsisolationsüberwachung als Reaktion auf die Ladeanforderung der Ladeverwaltungseinheit (111) durchzuführen.

11. Ladesteuerungssystem gemäß Anspruch 1, wobei die Ladeverwaltungseinheit ferner dazu konfiguriert ist, mindestens eine der folgenden Funktionen bereitzustellen: eine Funktion der Interaktion mit dem zu ladenden Fahrzeug, eine Funktion der Mensch-Computer-Interaktion mit einem Benutzer und eine Flüssigkeitskühlungssteuerungsfunktion, die für die Ladeverwaltungseinheiten (111) gesteuert wird.

12. Eine Ladestation, die das Ladesteuerungssystem gemäß einem der Ansprüche 1-11 beinhaltet.

## Revendications

1. Un système de commande de charge, comprenant :
au moins un module de commande de charge (110) au niveau d'une couche de gestion de charge, chaque module de commande de charge (110) comprenant une unité de gestion de charge (111) en tant qu'unité de commande électronique ; et
au moins un module de commande de puissance (120) au niveau d'une couche de gestion de puissance, chacun des modules de commande de puissance (120) comprenant une unité de gestion de puissance en tant qu'unité de commande électronique et une unité de distribution de puissance (122) connectée à l'unité de gestion de puissance (121) ;
où la couche de gestion de puissance est une couche supérieure de la couche de gestion de charge, et l'unité de gestion de puissance (121) dans chacun des modules de commande de puissance (120) est connectée à l'unité de gestion de charge (111) dans au moins l'un des modules de commande de charge (110) ;
chacune des unités de gestion de charge (111) est configurée pour être connectée à au moins un véhicule à charger, recevoir une demande de charge du véhicule à charger, et envoyer la demande de charge à l'unité de gestion de puissance (121) connectée à celle-ci ; et
l'unité de gestion de puissance (121) est configurée pour commander l'unité de distribution de puissance (122) afin de distribuer de la puissance à l'unité de gestion de charge (111) selon une instruction de planification et la demande de charge reçue, et surveiller l'unité de gestion de charge (111) pour charger le véhicule à charger avec la puissance distribuée afin de mener à bien la commande de puissance de charge ; et
un module de commande de service (140) au niveau d'une couche de surveillance de site, comprenant une unité de surveillance de site (141) en tant qu'unité de commande électronique ;
la couche de surveillance de site est une couche supérieure de la couche de gestion de puissance ; et
l'unité de surveillance de site (141) est respectivement connectée à l'unité de gestion de puissance (121) dans chacun des modules de commande de puissance (120), configurée pour émettre l'instruction de planification à l'intention de l'unité de gestion de puissance (121), et collecter des informations d'état concernant le système de commande de charge, où les informations d'état concernant le système de commande de charge comprennent des informations d'état de fonctionnement concernant chaque unité et des informations de commande de charge et de service ; et
où l'unité de surveillance de site (141) est connectée à un cloud, configurée pour recevoir l'instruction de planification en provenance du cloud afin d'effectuer une gestion de station lorsqu'elle est connectée au cloud normalement, et télécharger des informations d'état collectées concernant le système de commande de charge vers le cloud afin d'effectuer un règlement de puissance ; et
où chacune des unités de commande électronique opère dans au moins l'un des modes suivants :
un mode de commande de déploiement de couche supérieure configuré pour commander l'opération selon la distribution de l'unité de commande électronique de la couche supérieure ;
un mode autonome configuré pour opérer de manière autonome ;
un mode de coopération de même couche configuré pour coopérer avec d'autres unités de commande électronique de la même couche ; et
les priorités du mode de commande de déploiement de couche supérieure, du mode de coopération de même couche et du mode autonome diminuent en séquence ; et
où chacune des unités de gestion de puissance (121) est en outre configurée pour désengager automatiquement le système de commande de charge et arrêter la commande de l'unité de distribution de puissance (122) et de l'unité de gestion de charge connectée à celle-ci après la défaillance des unités de gestion de puissance (121).

2. Le système de commande de charge selon la revendication 1, où chacune des unités de gestion de puissance (121) est connectée à un cloud, configurée pour recevoir l'instruction de planification en provenance du cloud, collecter des informations d'état concernant le système de commande de charge et télécharger celles-ci vers le cloud pour un règlement de puissance, où les informations d'état concernant le système de commande de charge comprennent des informations d'état de fonctionnement concernant chaque unité et des informations de commande de charge et de service.

3. Le système de commande de charge selon la revendication 1, où l'unité de surveillance de site (141) est en outre configurée pour effectuer une gestion de site de manière autonome lorsque la connexion avec le cloud est perdue, et stocker les informations d'état collectées concernant le système de commande de charge localement jusqu'à ce que les informations d'état concernant le système de commande de charge soient téléchargées après le rétablissement de la connexion avec le cloud.

4. Le système de commande de charge selon la revendication 1, où l'unité de gestion de puissance (121) est en outre configurée pour effectuer de manière autonome la commande de puissance de charge lorsque la connexion avec l'unité de surveillance de site (141) est perdue, et enregistrer les informations de commande de charge et de service, et rapporter les informations de commande de charge et de service à l'unité de surveillance de site jusqu'à ce que la connexion avec l'unité de surveillance de site soit rétablie.

5. Le système de commande de charge selon la revendication 1, comprenant en outre :
au moins un module de commande de stockage d'énergie (150) au niveau de la couche de gestion de puissance, chaque module de commande de stockage d'énergie comprenant une unité de gestion d'énergie (151) en tant qu'unité de commande électronique et un dispositif de stockage d'énergie (152) connecté à l'unité de gestion d'énergie ;
dans le cas où le système de commande de charge ne comprend pas la couche de surveillance de site, les unités de gestion d'énergie sont respectivement connectées à chacune des unités de gestion de puissance (121) et configurées pour commander le dispositif de stockage d'énergie afin d'effectuer un stockage et une décharge d'énergie en coopération avec chacune des unités de gestion de puissance (121) ; et
dans le cas où le système de commande de charge comprend la couche de surveillance de site, l'unité de gestion d'énergie est respectivement connectée à chacune des unités de gestion de puissance (121) et à l'unité de surveillance de site, et est configurée pour commander le dispositif de stockage d'énergie afin d'effectuer un stockage et une décharge d'énergie sous la commande de déploiement de l'unité de surveillance de site et/ou en coopération avec chacune des unités de gestion de puissance (121).

6. Le système de commande de charge selon la revendication 1, où chacun des modules de commande de puissance (120) comprend en outre une pluralité de modules de puissance ; et
l'unité de distribution de puissance (122) est configurée pour exécuter une logique de commutation du module de puissance sous la commande de l'unité de gestion de puissance (121) afin de distribuer de la puissance à l'unité de gestion de charge (111).

7. Le système de commande de charge selon la revendication 1, où chacune des unités de gestion de charge est en outre configurée pour désengager automatiquement la commande de l'unité de gestion de puissance (121) connectée à celle-ci et arrêter la charge après la défaillance des unités de gestion de charge (111).

8. Le système de commande de charge selon la revendication 5, où chacune des unités de gestion d'énergie est en outre configurée pour désengager automatiquement le système de commande de charge et faire cesser la commande du dispositif de stockage d'énergie connecté à celle-ci après la défaillance des unités de gestion d'énergie (151).

9. Une station de charge comprenant le système de commande de charge selon la revendication 1, où le système de commande de charge est installé au niveau de la station de charge, la station de charge comprenant un dispositif de caméra, un système de verrouillage au sol, et un système de contrôle d'accès ;
l'unité de surveillance de site est respectivement connectée au dispositif de caméra, au système de verrouillage au sol, et au système de contrôle d'accès, et est en outre configurée pour collecter une image du dispositif de caméra en vue d'une surveillance environnementale, et pour commander le système de verrouillage au sol et le système de contrôle d'accès.

10. Le système de commande de charge selon la revendication 1, où l'unité de gestion de puissance (121) est en outre configurée pour effectuer une surveillance d'isolement de tension en réponse à la demande de charge de l'unité de gestion de charge (111).

11. Le système de commande de charge selon la revendication 1, où l'unité de gestion de charge est en outre configurée pour fournir au moins l'une des fonctions suivantes : une fonction d'interaction avec le véhicule à charger, une fonction d'interaction homme-ordinateur avec un utilisateur, et une fonction de commande de refroidissement de liquide qui est commandée pour les unités de gestion de charge (111).

12. Une station de charge, comprenant le système de commande de charge selon l'une quelconque des revendications 1 à 11.
